Europäisches Patentamt

European Patent Office

Office européen des brevets

(19)

(11) Veröffentlichungsnummer: **0 228 577**
**B1**

(12) **EUROPÄISCHE PATENTSCHRIFT**

(45) Veröffentlichungstag der Patentschrift: **24.10.90**

(51) Int. Cl.⁵: **G 01 F 1/10**

(21) Anmeldenummer: **86116574.4**

(22) Anmeldetag: **28.11.86**

(54) Durchflussmesser.

(30) Priorität: **12.12.85 CH 5298/85**

(43) Veröffentlichungstag der Anmeldung:
**15.07.87 Patentblatt 87/29**

(45) Bekanntmachung des Hinweises auf die
Patenterteilung:
**24.10.90 Patentblatt 90/43**

(84) Benannte Vertragsstaaten:
**BE CH DE FR GB IT LI LU NL SE**

(56) Entgegenhaltungen:
**EP-A-0 031 629**
**US-A-2 209 700**
**US-A-3 240 063**
**US-A-3 307 396**
**US-A-3 898 883**

(73) Patentinhaber: **Bieo AG**
**Hinterfeld 1a**
**CH-8852 Altendorf (CH)**

(72) Erfinder: **Peters, Paulus Jakobus**
**Boomsestraat 14**
**Balgoy (NL)**

(74) Vertreter: **Patentanwälte Schaad, Balass & Partner**
**Dufourstrasse 101 Postfach**
**CH-8034 Zürich (CH)**

Courier Press, Leamington Spa, England.

EP 0 228 577 B1

# Beschreibung

Die Erfindung betrifft einen Durchflussmesser der im Oberbegriff des Patentanspruches 1 genannten Gattung. Ein solcher Durchflussmesser ist beispielsweise aus der US—A—2 209 700 als Bestandteil einer Kraftstoff-Zapfsäule bekannt. Bei dem bekannten Durchflussmesser trägt der einem vielflügligen Laufrad einer Turbine vergleichbare Rotor an seinem Umfang eine Ringscheibe, die sich in eine ringförmige, vom zylindrischen Durchlass radial ausgehende und mit diesem kommunizierende Kammer erstreckt. Diese Kammer ist von Stirnwänden begrenzt, in denen miteinander fluchtende Fenster ausgebildet sind. Ebenso besitzt die Ringscheibe zwei Fenster. Mit den Fenstern in den Stirnwänden der Kammer fluchtet auch eine Lichtschranke, deren Lichtstrahl parallel zur Achse des Rotors ist. Bei jeder Umdrehung des Rotors kommt auch eines der Fenster in der Ringscheibe an den Fenstern in den Stirnwänden vorbei und gibt somit den Lichtstrahl der Lichtschranke frei, wodurch ein Zählsignal erzeugt wird.

Dem bekannten Durchflussmesser haften mehrere Nachteile an. Sein Ansprechverhalten ist vergleichsweise träge, denn der Rotor muss sowohl beim Anlaufen als auch bei seiner Drehung die Flüssigkeitsreibung zwischen der Ringscheibe einerseits und den beiden Stirnwänden der Kammer andererseits überwinden. Ebenso beeinträchtigt die Trägheit des bekannten Durchflussmessers dessen Genauigkeit, wenn die Strömung plötzlich abgestellt wird, dann die vergleichsweise grosse Masse des einmal in Drehung versetzten Rotors mit Ringscheibe veranlasst diese, noch etwas weiter zu drehen, selbst wenn keine Flüssigkeit mehr fliesst. Diese Nachteile des bekannten Durchflussmessers sind auch dafür verantwortlich, dass seine Charakteristik kaum linear in dem Sinne ist, dass die Anzahl Umdrehungen des Rotors streng proportional zur Durchflussmenge ist. Diese Nachteile sind jedoch beim bekannten Durchflussmesser von geringer Bedeutung, denn bei einer Zapfsäule ändert sich die Durchflussmenge in der Regel nur in relative engen Grenzen.

Ausserdem ist der bekannte Durchflussmesser auch nicht sehr präzise, denn je Umdrehung des Rotors entstehen nur zwei Zählsignale, von denen jedes im wesentlichen sinusförmig ist. Schliesslich ist der bekannte Durchflussmesser für sehr geringe Durchflussmengen ungeeignet, denn seine Abmessungen lassen sich nicht beliebig verkleinern.

Es ist deshalb eine Aufgabe der Erfindung, einen Durchflussmesser der eingangs genannten Gattung derart zu gestalten, dass die erwähnten Nachteile vermieden werden und dass der Durchflussmesser sich mit so geringen Abmessungen herstellen lässt, dass noch Durchflussmengen in der Grössenordnung von 0,5 l/h mit grosser Genauigkeit gemessen werden können.

Diese Aufgabe wird beim vorgeschlagenen Durchflussmesser erfindungsgemäss dadurch gelöst, dass er die im Kennzeichen des Patentanspruches 1 angegebenen Merkmale aufweist.

Die sehr einfache Formgebung des Rotors gestattet eine ausgeprochene Miniaturisierung um damit auch seine Trägheit zu vermindern, wobei bei jeder Umdrehung de Rotors ebensoviele Zählsignale erzeugt werden, als dieser Flügel hat. Zweckmässig wird dieser Rotor einstückig aus einem Kunststoff hergestellt. Da der Schlitz in den Flügeln von einer deren Stirnseiten ausgeht, also keinen in sich geschlossenen Umriss aufweist, besteht auch keine Gefahr, dass eine vom Medium mitgenommene Gasblase im oder am Rotor hängenbleibt, welche den Strahl der Lichtschranke abfälschen könnte.

Weitere Einzelheiten ergeben sich aus der nachfolgenden Beschreibung eines Ausführungsbeispiels des vorgeschlagenen Durchflussmessers. Es zeigt:

Fig. 1 einen Längsschnitt eines in einer Schlauchleitung eingebauten Durchflussmessers im Massstab von etwa 10:1,

Fig. 2 einen Schnitt längs der Linie A—A der Fig. 1,

Fig. 3 einen Schnitt längs der Linie B—B der Fig. 1, und

Fig. 4 in isometrischer Darstellung eine Ausführungsform eines Rotors.

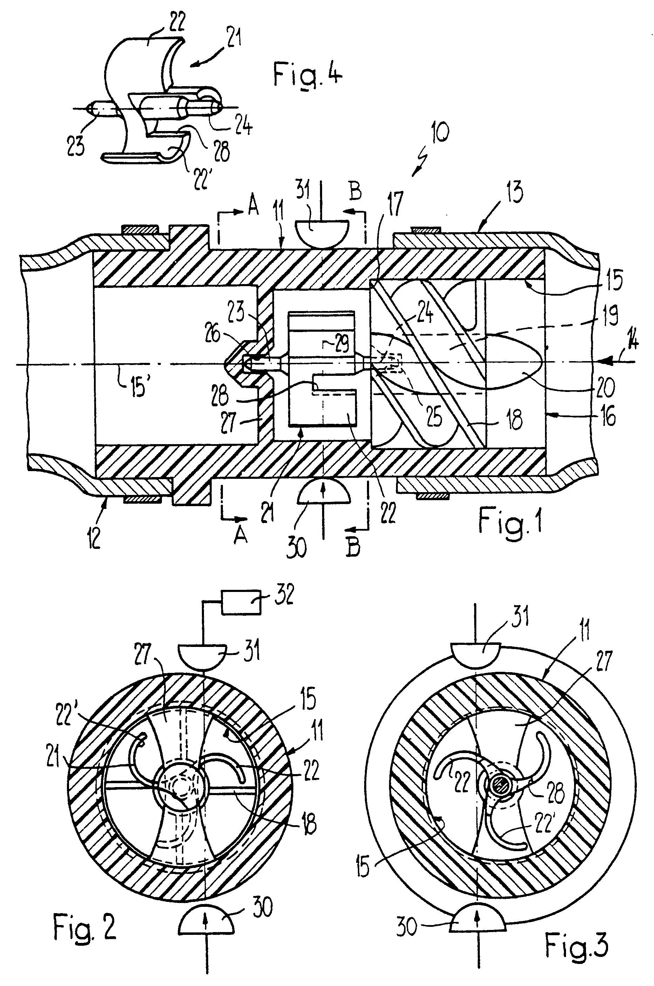

Der in Fig. 1—3 dargestellte Durchflussmesser 10 besitzt ein Gehäuse 11 in der Form etwa eines Rohrstückes, welches Gehäuse 10 aus einem durchsichtigen Werkstoff, z.B. einem glasklaren Kunststoff ist. Beiderends ist an das Gehäuse 11 ein Schlauchleitung 12, 13 angeschlossen, z.B. die Kraftstoffleitung zu einem Verbrennungsmotor. Ein flüssiges Medium durchströmt die Schlauchleitung 12, 13 und das Gehäuse 11 in Richtung des Pfeiles 14. In dem im wesentlichen zylindrischen Durchglass 15 ist im Presssitz ein Leitapparat 16 angeordnet, der abströmseitig auf einer im Durchlass 15 ausgebildeten Schulter 17 ansteht. Der Leitapparat 16 hat die Form einer viergängigen Schraube oder Schnecke, wobei jeder Gang 18 radial von einem Kern 19 absteht und sich bis zur Berührung der Innenwand des Durchlasses 15 erstreckt. Jeder Gang führt um ca. 180°. Der Kern 19 ist über die anströmseitige Stirnseite des Leitapparates 16 in der Form eines Stromlinienkörpers 20 verlängert. Der Leitapparat 16 teilt in diesem Falle das anfallende Medium in vier Teilströme, welche wegen des im Vergleich des Durchflussquerschnittes des Durchlasses 15 geringeren gesamten Durchflussquerschnitt im Bereich des Leitapparates 16 beschleunigt werden und einen Drall erhalten. Der Leitapparat 16 kann auch weniger oder mehr als vier Gänge aufweisen und diese können auch um mehr als 180° führen. Wesentlich ist nur, dass der Leitapparat 16 dem anfallenden Medium einen Drall erteilt. Der Leitapparat 16 ist ebenfalls zweckmässig einstückig aus einem Kunststoff hergestellt.

Auf den Leitapparat folgt ein Rotor 21 mit drei Fügeln 22. Den Fig. 2 und 3 ist zu entnehmen, dass die Flügel 22 von ihrer Wurzel bis zu ihrem Ende im wesentlichen die gleiche Dicke haben und um zur Längsachse 15' des Durchlasses parallele Krümmungsachsen gekrümmt sind. Somit besitzt jeder der Flügel 22 eine konkave Fläche 22', die von dem mit dem Drall versehenen Medium beaufschlagt wird. Je ein Wellenstummel 23, 24 steht über eine der Stirnseiten des Rotors 21 vor und dienen zu dessen Lagerung. Der anströmseitige Wellenstummel 24 greift mit etwas Spiel in eine im abströmseitigen Ende des Kernes 19 ausgebildete Bohrung 25 und der abströmseitige Wellenstummel 23 ebenfalls mit etwas Spiel in eine Sackbohrung 26, die in der Mitte einer den Durchlass 15 diametral durchsetzenden, angeformten Traverse 27 ausgebildet ist. Die Wellenstummel 23 und 24 sind vorzugsweise aus einem Kunststoff und einstückig mit den Flügeln 22 ausgebildet. Es ist zu beachten, dass im Interesse möglichst geringer Reibungsverluste des Rotors 21 dieser sowohl mit etwas radialem als auch mit etwas achsialem Spiel gelagert ist. Auf eine interessante Erscheinung beim Betrieb des Durchflussmessers wird noch zurückzukommen sein.

Jeder der Flügel 22 besitzt einen von seiner anströmseitigen Stirnseite ausgehenden, durchgehenden Schlitz 28. Diese Schlitze 28 dienen als "Fenster" für eine Lichtschranke 29 (Fig. 3), die sich zwischen einer Lichtquelle, beispielsweise einer Leuchtdiode 30, und einem Lichtempfänger, beispielsweise einem Fototransistor 31 erstreckt. Beim dargestellten Durchflussmesser wird somit die Lichtschranke je Umdrehung des Rotors 21 dreimal unterbrochen und dreimal freigegeben. Wie in Fig. 2 schematisch angedeutet, werden die vom Fototransistor 31 gelieferten Signale einem Messgerät 32 zugeführt, das beispielsweise im Prinzip ein Frequenzmesser sein kann, jedoch direkt die Durchflussmenge pro Zeiteinheit angibt, oder aber auch ein integrierender (und rückstellbarer) Zähler sein kann, der die gesamte Durchflussmenge anzeigt. Wichtig ist, dass im Interesse eines Ansprechens auch bei sehr geringen Durchflussmengen die träge Masse des Rotors 21 möglichst gering gehalten wird. Wenn das Medium am Rotor 21 vorbeigeflossen ist, muss es die Traverse 27 umströmen. Es wurde nun festgestellt, dass wenn zwei der vier den Leitapparat 16 verlassenden Teilströme mehr oder weniger frontal auf die Traverse 27 auftreffen, der Rotor 21 entgegen der Erwartung mit seinem abströmseitigen Wellenstummel 23 nicht der Axialkomponente der Strömung folgend so tief als möglich in die Bohrung 26 gedrückt wird. Im Gegenteil: Der Rotor 21 dreht gewissermassen in axialer Richtung schwebend. Man ist versucht, diese Erscheinung dadurch zu erklären, dass die frontal auf die Traverse 27 auftreffenden Teilströme im Zuge ihres "Ausweichmanövers" zum Umgehen der Traverse 27 auf die abströmseitige Stirnseite des Rotors 21 entgegen der allgemeinen Strömungsrichtung einwirken. Es wurde auch festgestellt, dass diese überraschende Erscheinung umso ausgeprägter ist, je grösser die Durchflussmenge ist.

Es ist nicht zwingend, dass die Schlitze 28 von der anströmseitigen Stirnseite der Flügel 22 ausgehen. Sie können auch von deren abströmseitigen Stirnseite ausgehen. Die dargestellte Ausführungsform besitzt jedoch den durch Versuche erhärteten Vorteil, dass allenfalls durch die Flüssigkeit mitgeführte Gasblasen sich nicht in den Schlitzen 28 festsetzen können und dadurch die Drehung des Rotors und/oder die Funktion der Lichtschranke 29 verfälschen.

Versuche haben ergeben, dass die Charakteristik des dargestellten Durchflussmessers 10 in einem Bereich von 1—50 (willkürliche Einheiten für die Durchflussmenge pro Zeiteinheit) nur etwa 2% von der idealen Linearität abweicht, und dies sowohl bei pulsationsfreier als auch bei pulsierender Strömung. Schliesslich besticht der dargestellte Durchflussmesser durch seine Einfachheit im Aufbau und in der Montage.

**Patentansprüche**

1. Durchflussmesser mit einem in einem im wesentlichen zylindrischen Durchlass (15) koaxial angeordneten, drehbar gelagerten und mit Flügeln (22) versehenen Rotor (21), dem ein schraubenförmiger Leitapparat (16) koaxial vorgeschaltet ist, der dazu bestimmt ist, das anströmende Medium in Teilströme zu unterteilen und diesen einen Drall zu erteilen, um danach die Flügel (22) zu beaufschlagen, deren beaufschlagte Flächen (22') konkav sind, sowie mit einer Lichtschranke (29, 30, 31), die bei drehendem Rotor (21) durch diesen wiederholt unterbrochen und freigegeben wird, dadurch gekennzeichnet, dass die Lichtschranke (29, 30, 31) die Achse (15') des Rotors (21) im wesentlichen rechtwinklig und in einem Abstand kreuzt, und dass jeder der ausschliesslich um zur Achse (15') des Rotors (21) parallele Krümmungsachsen gekrümmten Flügel (22) einen zur Achse (15') des Rotors (21) parallelen, von der anströmseitigen oder der abströmseitigen Stirnseite ausgehenden Schlitz (28) aufweist, durch den bei drehendem Rotor (21) der Lichtstrahl (29) der Lichtschranke (29, 30, 31) kurzzeitig hindurchtritt.

2. Durchflussmesser nach Anspruch 1, dadurch gekennzeichnet, dass der Schlitz (28) von der dem Leitapparat (16) zugekehrten Stirnseite jedes der Flügel (22) ausgeht.

3. Durchflussmesser nach Anspruch 1 oder 2, dadurch gekennzeichnet, dass der Rotor drei Flügel aufweist und einstückig aus einem Kunststoff ist.

**Revendications**

1. Débimètre comportant un rotor (21), qui est monté rotatif coaxialement dans un passage (15) sensiblement cylindrique et est équipé d'ailettes (22) et en amont duquel est installé coaxialement un dispositif directeur (16) de forme hélicoïdale destiné à subdiviser le milieu arrivant en écoulements partiels et à faire entrer en rotation ce milieu pour charger ensuite les ailettes (22), dont les surfaces chargées (22') sont concaves, ainsi qu'une barrière photoélectrique (29, 30, 31), qui, lorsque le rotor (22) tourne, est interrompue et libérée de façon répétée par ce dernier, caractérisé en ce que la barrière photoélectrique (29, 30, 31) est sensiblement perpendiculaire à l'axe (15') du rotor (21) et croise cet axe à une certaine distance, et que chacune des ailettes (22), cintrées exclusivement autour d'axes de courbure parallèles à l'axe (15') du rotor (21), possède une fente (28), qui est parallèle à l'axe (15') du rotor (21), s'étend à partir de la face frontale située côté arrivée ou côté départ et est traversée pendant un bref intervalle de temps par le faisceau de lumière (29) de la barrière photoélectrique (29, 30, 31), lorsque le rotor (21) tourne.

2. Débimètre selon la revendication 1, caractérisé en ce que la fente (28) s'étend à partir de la face frontale, tournée vers le dispositif directeur (16), de chacune des ailettes (22).

3. Débitmètre selon la revendication 1 ou 2, caractérisé en ce que le rotor comporte trois ailettes et est réalisé d'un seul tenant en une matière plastique.

**Claims**

1. A flow meter comprising a rotor (21) which is arranged co-axially within a substantially cylindrical passage (15), is rotatably mounted and provided with vanes (22) which is co-axially preceded by a screw-shaped guiding device (16) which has the purpose of subdividing the inflowing fluid into part-flows and to impart a twist to these prior to impingement on the vanes (22), of which the surfaces impinged upon (22') are concave, as well as a light barrier (29, 30, 31) which is repeatedly interrupted and cleared by the rotor (21) whilst the latter rotates, characterised in that the light barrier (29, 30, 31) crosses the axis (15') of the rotor (21) substantially at right angles and at a distance and that each of the vanes (22), curved exclusively around axes of curvature parallel to the axis (15') of the rotor (21), has a slot (28), parallel to the axis (15') of the rotor (21) starting from the upstream or the downstream and, through which the light beam (29) of the light barrier (29, 30, 31) passes briefly whilst the rotor (21) is rotating.

2. A flow meter according to claim 1, characterised in that the slot (28) starts from the end of each of the vanes (22) which is turned towards the guiding device (16).

3. A flow meter according to claim 1 or 2, characterised in that the rotor comprises three vanes and is made in one piece of plastics material.

Fig.4

Fig.1

Fig. 2

Fig.3